# EUROPÄISCHE PATENTSCHRIFT

(11) **EP 2 401 576 B1**
(45) Veröffentlichungstag und Bekanntmachung des Hinweises auf die Patenterteilung: **27.07.2016**
(21) Anmeldenummer: 10705339.9
(22) Anmeldetag: 19.02.2010
(51) Int. Cl.: G01C 1/04, G01C 1/06, G01C 5/00, G01C 15/00, G01C 15/06

(54) **NIVELLIERGERÄT UND VERFAHREN ZUM NIVELLIEREN**
Method and device for levelling
Appareil de nivellement et procédé de nivellement

(30) Priorität: 25.02.2009 EP 09153608
(43) Veröffentlichungstag der Anmeldung: 04.01.2012
(73) Patentinhaber: Leica Geosystems AG, 9435 Heerbrugg (CH)
(72) Erfinder: LAIS, Josef, CH-9437 Marbach (CH)
(74) Vertreter: Kaminski Harmann
(86) Internationale Anmeldenummer: PCT/EP2010/052129
(87) Internationale Veröffentlichungsnummer: WO 2010/097346

(56) Entgegenhaltungen:
- EP-B- 0 808 447
- DE-A1- 3 302 948
- DE-A1- 3 424 806
- DE-A1- 4 304 815
- US-A1- 2002 195 550

## Beschreibung

Die Erfindung bezieht sich auf ein Nivelliergerät nach dem Oberbegriff des Anspruches 1 und ein Verfahren zum Nivellieren bzw. Vermessen nach dem Oberbegriff des Anspruches 11.

Beim Vermessen bzw. Nivellieren werden Nivelliergeräte zusammen mit Messlatten eingesetzt. Ein Nivelliergerät umfasst ein Messfernrohr und eine Einrichtung beispielsweise in der Form einer Libelle, welche die im Wesentlichen horizontale Ausrichtung der optischen Achse des Messfernrohrs gewährleistet. Wenn das Nivelliergerät auf einem Dreifuss montiert ist, so kann mit drei verstellbaren Fussschrauben des Dreifusses der Messhorizont hergestellt werden, indem die Libelle eingespielt wird. Nebst der Grobhorizontierung mit einer Dosenlibelle kann auch eine Feinhorizontierung durchgeführt werden, wobei beispielsweise eine genauere Röhrenlibelle eingesetzt wird. Mit Hilfe eines Kompensators ist es möglich die Zielachse des Nivelliergerätes auch ohne Präzisionslibelle zu horizontieren. Zumindest ein Teil der Restneigung des Zielstrahles, die nach der Vorhorizontierung mit der Dosenlibelle verbleibt, wird unter Ausnützung der Schwerkraft durch den Kompensator ausgeglichen. Der Kompensator kann unerwünschte Schwingungen mit einer Dämpfung schwächen.

Beim Blick durch das Fernrohr auf die Nivellierlatte kann der lotrechte Abstand zwischen dem Lattenaufsatzpunkt und dem Horizont ermittelt werden. Nivellierlatten weisen beispielsweise eine Höhe von 4 m auf. Zumindest auf einem Längsbereich befindet sich ein genauer Massstab. Der Nullpunkt der Teilung ist der Lattenaufsatzpunkt. Es sind dabei verschiedene Ausführungen für Nivellierlatten bekannt, wobei diese beispielsweise auf der Rückseite eine Dosenlibelle und einen Griff aufweisen können. Durch Einspielen der Libelle wird die Latte lotrecht gehalten. Es gibt auch Latten, die mindestens eine weitere Teilung umfassen.

In Kombination mit digitalen Nivelliergeräten, welche den anvisierten Bereich auf einen Sensorarray abbilden und eine Auswertung dieser Abbildung durchführen, werden entsprechende Digitalnivellierlatten eingesetzt. Eine solche Messlatte kann vom Gerät automatisch abgelesen und die Daten können ausgewertet und gespeichert werden. Um das Nivellieren zu automatisieren, sind - neben den Auswerte- und Speicherelementen des Nivelliergerätes - auch Messlatten mit mindestens einer automatisch auswertbaren Codierung erforderlich.

Bei den bekannten digitalen Nivelliergeräten umfasst das Fernrohr zumindest ein Objektiv, eine Fokussiereinrichtung, einen Strahlteiler, ein Strichkreuz, ein Okular und einen Detektor mit dem Sensorarray. Mit dem optischen System kann bereits eine Lattenablesung von Auge erfolgen. Da ein Teil des Lichtes im Strahlteiler auf einen Detektor für die elektronische Bildumwandlung umgelenkt wird, kann die Datenerfassung auch automatisch erfolgen. Der Strahlteiler kann z.B. derart als Bandpassfilter ausgebildet sein, dass für das Auge wichtige Spektralbereiche der elektromagnetischen Strahlung zum Okular weitergeleitet und andere spektrale Anteile dem Sensorarray zugeführt werden.

Der Messablauf wird durch eine Prozessoreinheit gesteuert, die nicht nur die Messung in Echtzeit auswertet, sondern auch Korrekturen anbringen kann, welche von den Umgebungsbedingungen - beispielsweise von der Temperatur - abhängen, wofür verschiedene Auswertealgorithmen bekannt sind. Die meisten verwenden dabei einen Abschnitt der Teilung und bestimmen neben der anvisierten Höhe auch eine Distanz.

Vom Detektor wird das empfangene codierte Muster der Latte in digitale Daten umgewandelt. Weiters wird die Position der Fokussierlinse durch den Fokusgeber aufgezeichnet. Aus dieser Stellung lässt sich die ungefähre Distanz zwischen Gerät und Latte ermitteln. In einem Entfernungsbereich von 1,80 m bis 100 m verschiebt sich die Fokussierlinse beispielsweise um ca. 14 mm. Bei den bekannten Lösungen wird die aus der Ermittelung der Position der Fokussierlinse abgeleitete Distanz nicht genügend genau bestimmt. Zudem ist das Verstellen der Fokussierlinse zeitaufwändig.

Beim Vermessen mit einem digitalen Nivelliergerät muss im ersten Schritt wie bei einem herkömmlichen Verfahren die Nivellierlatte angezielt und fokussiert werden. Nachdem die Messtaste betätigt wurde, wird die Stellung der Fokussierlinse registriert und der Kompensator überwacht. Im darauf folgenden Schritt wird die Zielhöhe und die Distanz näherungsweise bestimmt. Schliesslich wird im letzten Schritt die genaue Höhe und der Abstand mit Auswertungs- insbesondere Korrelationsverfahren ermittelt. Um eine Korrelation durchführen zu können, muss ein Referenzsignal gespeichert sein, welches der Abbildung der Nivellierlatte entspricht. Die Höhe kann beispielsweise ermittelt werden, indem das Messsignal so lange verschoben wird, bis Referenzsignal und Messsignal bestmöglich übereinstimmen. Die Verschiebung des Messsignals entspricht der gesuchten Höhe. Weil das Messsignal in Abhängigkeit von der Entfernung unterschiedlich gross abgebildet wird, muss zuvor der Massstab des Messsignals an den Massstab des Referenzsignals angeglichen werden.

Digitale Nivelliergeräte sind beispielsweise aus den Patentschriften DE 36 18 513 C2, DE 198 33 996 C1 EP 1 066 497 B1 und DE 198 04 198 B4 bekannt, wobei die Detektoren der letzten beiden Schriften zweidimensionale Sensorarrays umfassen. Die EP 0 066 497 B1 beschreibt ein Auswertungsverfahren bei dem eine schiefe Lage der Messlatte ermittelt bzw. kompensiert wird. Zudem wird für eine genaue Entfernungsbestimmung ein zusätzlicher Entfernungsmesser vorgeschlagen, was den Geräte- und Auswertungsaufwand erhöht. Die DE 198 04 198 B4 beschreibt Ausführungsformen, bei denen die Bildsignale mittels Fouriertransformationen ausgewertet werden, was die Korrelation mit dem Referenzsignal der Messlatte verbessert.

EP 0 808 447 B1 beschreibt eine Vorrichtung, bei der die Abbildungsoptik eine Mehrzahl von unterschiedlich abbildenden Pupillenzonen aufweist, welchen ortsauflösende optoelektronische Detektoren oder Teilbereiche eines ortsauflösenden optoelektronischen Detektors zugeordnet sind, sodass die Abbildungsoptik eine simultane Abbildung aus unterschiedlichen Entfernungsbereichen ermöglicht. Der Aufbau dieser Vorrichtung ist relativ aufwändig und es gibt Abstandsbereiche, die von keiner Pupillenzone scharf abgebildet werden.

Bei den bekannten Lösungen ist das Bereitstellen von auswertbaren Informationen einer anvisierten Messlatte unabhängig von deren Abstand zum Nivelliergerät aufwändig. Zudem können bei der Höhenbestimmung kleine Abweichungen von der horizontalen Ausrichtung des Fernrohrs bzw. des Nivelliergerätes nicht mit kleinem Aufwand korrigiert werden.

Eine Aufgabe besteht nun darin, eine Lösung zu finden, mit der auswertbare Informationen einer anvisierten Messlatte in einem grossen Abstandsbereich zum digitalen Nivelliergerät einfach bereitgestellt werden können. Insbesondere soll dabei die Abbildungsoptik weniger Fehleranfällig sein, sodass ein robusteres und präziseres Bestimmen der Höheninformation ermöglicht wird.

Ausserdem sollen als weitere, spezielle Aufgabe auch exakte Höhenwerte bestimmt werden können, wenn kleine Abweichungen von der horizontalen Ausrichtung des Nivelliergerätes auftreten.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

In einem ersten Schritt der Erfindung wurde erkannt, dass das Verfahren zum Nivellieren und das Nivelliergerät einfacher werden, wenn das Nivelliergerät eine Fernrohroptik und ein davon räumlich getrenntes Abbildungssystem mit eigener Abbildungsoptik aufweist. Dadurch wird das Bereitstellen einer auswertbaren Informationen einer anvisierten Messlatte von der Fernrohroptik und insbesondere von einer Fokussiereinrichtung des Fernrohres getrennt.

Wenn das Fernrohr nur zum Anvisieren eines Objektes (Messlattenabschnitt) aber nicht zum Ablesen der Objektinformation (Massstab) verwendet wird, so ist es nicht nötig, dass die Fernrohr-Fokussierung genau auf den Abstand zur Messlatte eingestellt wird. Gegebenenfalls wird auf ein Fokussieren verzichtet, was den Vermessungsablauf vereinfacht. Es versteht sich von selbst, dass dann anstelle eines Fernrohres auch gegebenenfalls eine Visiereinrichtung eingesetzt werden kann. Das Fernrohr oder die Visiereinrichtung definieren zumindest eine Fernrohr- bzw. Visierachse, welche als Ausrichtungsachse des Nivelliergerätes bezeichnet wird.

In einem zweiten Schritt der Erfindung wurde erkannt, dass die anhand des Abbildungssystems durchgeführten Messungen robuster und präziser werden, falls kein Verstellen der Fokusposition der Abbildungsoptik und/oder des Detektors in Abhängigkeit von einer Messlatten-Entfernung notwendig ist, da ein Verschieben von optischen Komponenten des Abbildungssystems stets die Gefahr von Abweichungen in der Fokussierlinie birgt und somit Ablauffehler auftreten können.

Bei einem erfindungsgemässen digitalen Nivelliergerät ist daher das Abbildungssystem örtlich getrennt von der Anzieleinrichtung angeordnet. Das Abbildungssystem weist dabei zumindest ein Abbildungsobjektiv auf, dem eine Objektivhauptebene zugeordnet ist, sowie einen Detektor mit einer in einer Bildebene liegenden Aufnahmeoberfläche. Die optische Achse der Anzieleinrichtung, die insbesondere als Zielfernrohr ausgeführt sein kann, bildet dabei eine Ausrichtungsachse, die zur Höhenbestimmung auf eine Messlatte ausrichtbar ist.

Die Ausbildungs- und Anordnungsweise des Abbildungsobjektivs und des nachgeordneten Detektors wird ein Erfassungsbereich des Abbildungssystems definiert als jener Winkelbereich, innerhalb wessen im Sichtfeld des Abbildungssystems befindliche Punkte auf der Aufnahmeoberfläche des Detektors abgebildet werden können.

Unter dem Erfassungsbereich, für welchen im weiteren auch der Bergriff Sichtfeld in synonymer weise verwendet wird, ist somit der maximale Winkelbereich des Abbildungssystems zu verstehen, innerhalb welchem Punkte durch das Abbildungsobjektiv mit der Aufnahmeoberfläche des Detektors erfassbar sind.

Es handelt sich somit um ein Nivelliergerät mit
o einer Ausrichtungsachse, welche zur Höhenbestimmung auf eine Messlatte ausrichtbar ist,
o einem Abbildungsobjektiv, dem eine Objektivhauptebene zugeordnet ist,
o einem Detektor, mit einer in einer Bildebene liegenden Aufnahmeoberfläche, und
o einer Auswertungsvorrichtung, die mit dem Detektor verbunden ist.

Dabei sind durch das Abbildungsobjektiv Objekte innerhalb eines Erfassungsbereichs auf die Aufnahmeoberfläche des Detektors abbildbar und durch die Auswertungsvorrichtung unter Verwendung der Detektorinformation eine Höheninformation zu einem abgebildeten Objekt bereitstellbar.

Gemäss der vorliegenden Erfindung sind dabei das Abbildungsobjektiv und der Detektor derart ausgebildet sowie derart relativ zueinander und zu einer die Ausrichtungsachse enthaltenden Objektebene angeordnet, dass gleichzeitig sämtliche innerhalb des Sichtfelds bzw. Erfassungsbereichs liegende Punkte der Objektebene scharf auf der Aufnahmeoberfläche des Detektors abgebildet werden.

Der Detektor ist des Weiteren mit einer Auswertungsvorrichtung verbunden, die zur Bestimmung und Bereitstellung einer Höheninformation zu einem auf der Aufnahmeoberfläche abgebildeten Objekt - unter Verwendung der Detektorinformation - ausgebildet ist.

Gemäß einer nicht zu der beanspruchten Erfindung gehörenden Ausführungsform kann der Effekt, dass entfernungsunabhängig sämtliche innerhalb des Erfassungsbereichs liegende Punkte der Objektebene scharf auf der Aufnahmeoberfläche des Detektors abgebildet werden, dadurch gewährleistet werden, dass das Abbildungsobjektiv eine einfallswinkelabhängig über den Erfassungsbereich variierende Brennweite aufweist. Z.B. kann das Abbildungsobjektiv eine Bildfeldwölbung in einer, insbesondere horizontalen, Achse aufweisen oder eine diffraktive Struktur, welche die winkelabhängige-insbesondere azimutwinkelabhängige - Variation der Brennweite des Abbildungsobjektivs erzeugt.

Gemäß der Erfindung sind, das Abbildungsobjektiv und der Detektor derart relativ zueinander und relativ zur Anzieleinrichtung bzw. zur dadurch definierten Ausrichtungsachse angeordnet, dass die Objektivhauptebene, die Bildebene und die Objektebene die Scheimpflug-Bedingung erfüllen. Auch dadurch kann erfindungsgemäss gewährleistet werden, dass entfernungsunabhängig sämtliche innerhalb des Erfassungsbereichs liegende Punkte der Objektebene scharf auf der Aufnahmeoberfläche des Detektors abgebildet werden.

Insbesondere wird die Scheimpflug-Bedingung dabei erfüllt, falls sich die Objektebene, die Bildebene und die Objektivhauptebene in einer gemeinsamen Linie bzw. Geraden schneiden. D.h., falls sich die Objektivhauptebene, die Bildebene und die Objektebene, welche die Ausrichtungsachse umfasst, in einer gemeinsamen Schnittlinie schneiden, kann die gewünschte scharfe Abbildung der sich in der Objektebene befindenden Objekte ohne Verstellungsaufwand während der Messung entfernungsunabhängig gewährleistet werden. Dadurch können eine fehlerunanfällige, robuste und dennoch hochpräzise Erfassung des Messlatten-Codes und somit eine verbesserte Bestimmung der Höheninformation ermöglicht werden.

Gegenüber den aus dem Stand der Technik bekannten Lösungen hat die erfindungsgemässe Lösung somit den Vorteil, dass sie beim Wechsel von einer ersten zu einer weiteren Distanz ohne Fokussieraufwand eine Höhenablesung an einem scharf abgebildeten Code durchführen kann.

Hinsichtlich der Ausführungsform des erfindungsgemässen Nivelliergeräts, bei der sich die Objektivhauptebene, die Bildebene und die Objektebene in einer Linie schneiden, ist insbesondere zwischen der Objektebene und der Objektivhauptebene ein Winkel α und zwischen der Objektivhauptebene und der Bildebene ein Winkel β ausgebildet. Die Scheimpflugsche Regel gewährleistet, dass bei einer scharfen Abbildung eines Punktes der Objektebene auf die Bildebene, insbesondere auf die Aufnahmeoberfläche des Detektors, auch alle anderen Punkte der Objektebene, die auf die Aufnahmeoberfläche des Detektors abgebildet werden, dort scharf abgebildet sind.

Von der Schnittlinie aus liegen das Zentrum des Abbildungsobjektivs in einem Objektivabstand und das Zentrum der Aufnahmeoberfläche des Detektors in einem Detektorabstand. Die beide Zentren können sich dabei im Wesentlichen in einer gemeinsamen, die Ausrichtungsachse umfassenden Normalebene zur Schnittlinie befinden. Bei einem geringen Abstand zwischen Abbildungssystem und Zielfernrohr verläuft die Abbildungslinie von einem Punkt der Objektivebene zu einem abgebildeten Punkt auf der Aufnahmeoberfläche also unter einem spitzen Winkel zur Ausrichtungsachse.

Um zu gewährleisten, dass ein gewünschter Distanzbereich der Ausrichtungsachse auf die Aufnahmeoberfläche des Detektors abgebildet wird, müssen die Winkel α und β, der Objektivabstand, der Detektorabstand sowie die Ausdehnung der Aufnahmeoberfläche des Detektors normal zur Schnittlinie entsprechend gewählt werden. Dabei wird der Abbildungsmassstab durch die Wahl der Winkel α und β bestimmt. Weil der Winkel α vorzugsweise im Bereich von 80° bis 90°, insbesondere im Wesentlichen bei 90° liegt, wird der Abbildungsmassstab im Wesentlichen vom Winkel β bestimmt.

Der Abbildungsmassstab und das Ausmass der Aufnahmeoberfläche des Detektors normal zur Schnittlinie hängen mit dem gewünschten Distanzbereich zusammen, sodass bei vorgegebenem Distanzbereich und bei einem vorgegebenen Ausmass der Aufnahmeoberfläche des Detektors normal zur Schnittlinie der Abbildungsmassstab und damit der Winkel β so gewählt werden muss, dass der gewünschte Distanzbereich auf die Aufnahmeoberfläche des Detektors abgebildet werden kann.

Nach der Wahl eines Objektivabstands kann entsprechend dem gewünschten Distanzbereich auch der für die richtige Abbildung benötigte Detektorabstand festgelegt werden.

Nach dem Festlegen der Winkel α und β, des Objektivabstands, des Detektorabstands und der Ausdehnung der Aufnahmeoberfläche des Detektors normal zur Schnittlinie kann die für eine scharfe Abbildung benötigte Brennweite des Abbildungsobjektivs festgelegt werden. Damit ein Punkt der Objektebene von einer Linse scharf auf einen Punkt der Aufnahmeoberfläche des Detektors abgebildet wird, muss bei dieser Abbildung die Gegenstandsweite g, die Bildweite b und die Brennweite f des Abbildungsobjektivs bzw. der Linse die Linsengleichung 1/f=1/g+1/b erfüllen, sodass gilt f=b*g / (b+g).

Bezüglich sämtlichen Ausführungsformen der Erfindung können ausserdem die folgenden Weiterbildungen Anwendung finden.

Weil die Brechzahl von der Ausbreitungsgeschwindigkeit des Lichtes in der Linse abhängt, ergeben sich farbabhängige Abbildungsfehler. Dies kann durch die Abstimmung der Linse auf die Farbe für die Codierung und/oder die Wahl des Frequenzbereichs, der vom Detektor erfasst wird, berücksichtigt werden.

Der Detektor umfasst vorzugsweise einen zweidimensionalen Sensorarray, welcher für ein scharf abgebildetes Objekt in einer ersten Richtung die Position auf der Ausrichtungsachse und vorzugsweise quer dazu in einer zweiten Richtung eine Höheninformation des Objektes erfasst. Die Positionsbestimmung auf der Ausrichtungsachse entspricht einer Triangulations-Distanzmessung und ist bei einer feinen Auflösung des Sensorarrays entsprechend genau. Die Bestimmung der Höheninformation kann gemäss einer beliebigen aus dem Stand der Technik bekannten Codeauswertung durchgeführt werden.

Weil aus der Triangulations-Distanzmessung die Distanz zum Objekt und aus den Abbildungsparametern des Nivelliergerätes der Abbildungsmassstab bekannt sind, kann das abgebildete Objekt für einen Vergleich mit einem gespeicherten Höhencode richtig skaliert werden, was die Auswertung erleichtert. Die Distanzbestimmung kann mit kleinerem Aufwand als bei den Lösungen gemäss dem Stand der Technik durchgeführt werden, was ein weiterer Vorteil ist. Zudem kann die Genauigkeit der Distanzbestimmung einfach erhöht werden, in dem die Auflösung des Sensorarrays in der ersten Richtung erhöht wird. Gegebenenfalls wird auch der Abbildungsmassstab durch die Wahl eines grösseren Winkels β erhöht.

Es versteht sich von selbst, dass zusätzlich auch die aus dem Stand der Technik bekannten Korrekturen bei schief stehender Messlatte durchgeführt werden können.

Ebenso ist es möglich, dass die Höheninformationen, bzw. entsprechende Codeabschnitte, quer zur Längsrichtung der Messlatte angeordnet werden und daher in der ersten Richtung des Sensorarrays abgebildet werden. Bei einer solchen Ausführungsform kann die Verwendung eines eindimensionalen Sensorarrays genügen.

Der Sensorarray ist beispielsweise als ein Diodenarray ausgebildet, wobei jedoch auch weitere dem Fachmann bekannte, flächige Sensoranordnungen mit einer Auslesung in zwei Ausleserichtung eingesetzt werden können. Vorzugsweise handelt es sich bei den Sensoren um Flächenarrays mit einer Auflösung, welche die Lage von Codestrichen erfassbar macht. Es ist ebenfalls möglich, zwischen der Aufnahmeoberfläche des Detektors und dem auswertenden Sensor eine Übertragungseinrichtung einzusetzen, welche die gewünschte Bildinformation durch eine serielle Abbildung der Aufnahmeoberfläche auf einen Sensor mit einer kleineren räumlichen Auflösung ermittelt. Eine Übertragungseinrichtung kann insbesondere auch lediglich eine optische Abbildung auf einen von der Aufnahmeoberfläche entfernten Detektor gewährleisten.

Weil auch bei einer möglichst genauen horizontalen Ausrichtung der Ausrichtungsachse diese etwas von der exakten horizontalen Richtung abweichen kann, wird vorzugsweise ein Neigungssensor mit der Auswertungsvorrichtung verbunden. Der Neigungssensor bestimmt einen Abweichungswinkel γ zwischen der Ausrichtungsachse und einer horizontalen Ausrichtungslinie in der Objektebene. Die Auswertungsvorrichtung ermittelt die Höheninformation unter Verwendung des Abweichungswinkels γ und der Position des abgebildeten Objekts auf der Ausrichtungsachse. Dadurch kann mit einfachen Mitteln eine sehr hohe Genauigkeit erzielt werden.

Wenn der Bereich entlang der Ausrichtungsachse, welcher auf die erste Aufnahmeoberfläche eines ersten Detektors abgebildet wird, nicht genügt, so kann mindestens ein weiterer Detektor eingesetzt werden, dessen weitere Aufnahmeoberfläche in einer weiteren Bildebene liegt, welche die gemeinsame Schnittlinie umfasst. Zwischen der Objektivhauptebene und der Bildebene liegt ein Winkel β'. Vorzugsweise erfolgt die Abbildung auf den zweiten Detektor durch ein weiteres Abbildungsobjektiv, dem eine weitere Objektivhauptebene zugeordnet ist, welche die gemeinsame Schnittlinie umfasst. Alternativ können jedoch auch zwei Abbildungsobjektive und nur ein Detektor verwendet werden.

Die Abbildungsparameter werden so gewählt, dass das weitere Abbildungsobjektiv Objekte eines weiteren Erfassungsbereichs auf die weitere Aufnahmeoberfläche des weiteren Detektors abbildet und die Auswertungsvorrichtung unter Verwendung der Information des weiteren Detektors eine Höheninformation zu einem abgebildeten Objekt bereitstellt.

Aufgrund der hohen Messgenauigkeit des erfindungsgemässen Nivelliergerätes gewinnt eine Kompensation der Brechungsindexschwankungen in der Luft an Bedeutung. Die Kompensation kann durch Ausnutzung der Dispersion erfolgen. Dazu ist es nötig, die gleiche Messung mit mindestens zwei Wellenlängen durchzuführen. Aus den gefundenen Messdifferenzen kann ein theoretischer Höhenwert im Vakuum extrapoliert werden.

Die Zeichnungen erläutern die Erfindung anhand von Darstellungen zum Stand der Technik und zu einem Ausführungsbeispiel der Erfindung. Dabei zeigen
- Fig. 1: eine schematische Darstellung eines horizontalen Schnittes durch eine Nivellieranordnung in einer ersten erfindungsgemässen Ausführungsform;
- Fig. 2: eine schematische Darstellung eines vertikalen Schnittes durch eine erfindungsgemässe Nivellieranordnung;
- Fig. 3: eine perspektivische Darstellung eines erfindungsgemässen Nivelliergerätes mit zwei Abbildungssystemen;
- Fig. 4: eine schematische Darstellung eines horizontalen Schnittes durch eine Nivellieranordnung in einer nicht zu der beanspruchten Erfindung gehörenden Ausführungsform;
- Fig. 5: eine schematische Darstellung eines vertikalen Schnittes durch eine Nivellieranordnung zur näheren Erläuterung der in Figur 4 abgebildeten Ausführungsform; und
- Fig. 6: eine schematische Darstellung eines horizontalen Schnittes durch eine Nivellieranordnung in einer zweiten erfindungsgemässen Ausführungsform.

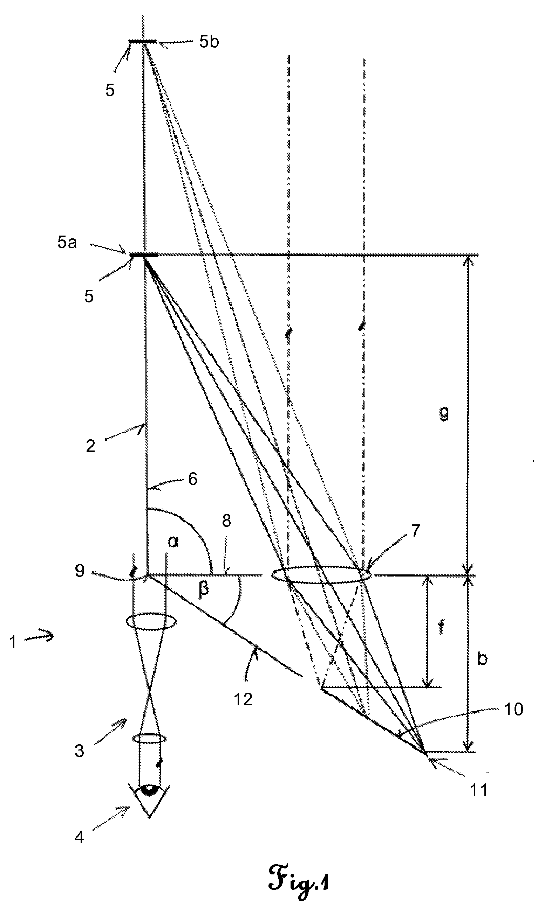

Figur 1 zeigt ein erstes, schematisch dargestelltes Beispiel für ein erfindungsgemässes Nivelliergerät 1, dessen Ausrichtungsachse 2 in der dargestellten Ausführungsform die Achse eines Fernrohrs 3 ist. Ein Benutzer 4 richtet die Ausrichtungsachse 2 auf eine Messlatte 5, die an zwei verschiedenen Positionen 5a und 5b auf der Ausrichtungsachse 2 dargestellt ist. Die vertikale Ebene mit der Ausrichtungsachse 2 wird als Objektebene 6 bezeichnet.

Ein Abbildungsobjektiv 7 ist in einer Objektivhauptebene 8 dargestellt, welche bei einer horizontal ausgerichteten Ausrichtungsachse 2 eine vertikale Ebene ist. Die Objektebene 6 und die Objektivhauptebene 8 schneiden sich in einer Schnittlinie 9 und schliessen den Winkel α zwischen sich ein.

Die Aufnahmeoberfläche 10 eines Detektors 11 liegt in einer Bildebene 12. Die Bildebene 12 schneidet die Objektivhauptebene 8 und die Objektebene 6 in der Schnittlinie 9. Zwischen der Objektivhauptebene 8 und der Bildebene 12 ist ein Winkel β ausgebildet. Durch diese Anordnung der Bildebene 12, der Objektivhauptebene 8 und der Objektebene 6 mit der gemeinsamen Schnittlinie 9 wird gewährleistet, dass alle Objekte in der Objektebene, die innerhalb eines Distanzbereiches liegen, unabhängig von ihrer Position ohne Verstellungsaufwand scharf auf die Aufnahmeoberfläche 10 abgebildet werden, wenn die scharfe Abbildung bei einer Position gewährleistet ist.

Die Scheimpflug-Bedingung ist gewährleistet und es kann daher auf eine Verstellung der Fokussierung des Abbildungsobjektivs 7 verzichtet werden. Bei einer Verschiebung der Messlatte 5 von einer ersten Position 5a zu einer weiteren Position 5b kann ohne Fokussieraufwand eine Höhenablesung an einem im Wesentlichen scharf abgebildeten Code durchgeführt werden.

Das Abbildungsobjektiv 7 bildet Objekte der Messlatte 5 auf die Aufnahmeoberfläche 10 des Detektors 11 ab und eine Auswertungsvorrichtung stellt unter Verwendung der Detektorinformation eine Höheninformation zu einem abgebildeten Objekt bereit.

Von der Schnittlinie 9 aus liegen das Zentrum des Abbildungsobjektivs 7 in einem Objektivabstand und das Zentrum der Aufnahmeoberfläche 10 des Detektors 11 in einem Detektorabstand. Beide Zentren befinden sich im Wesentlichen in einer gemeinsamen Normalebene zur Schnittlinie, welche Normalebene auch die Ausrichtungsachse 2 umfasst.

Um zu gewährleisten, dass ein gewünschter Distanzbereich der Ausrichtungsachse 2 auf die Aufnahmeoberfläche 10 des Detektors 11 abgebildet wird, müssen die Winkel α und β, der Objektivabstand, der Detektorabstand und die Ausdehnung der Aufnahmeoberfläche 10 des Detektors 11 normal zur Schnittlinie 9 richtig gewählt werden. Dabei wird der Abbildungsmassstab durch die Wahl der Winkel α und β bestimmt. Weil der Winkel α vorzugsweise im Bereich von 80° bis 90°, in der dargestellten Ausführungsform im Wesentlichen bei 90° liegt, wird der Abbildungsmassstab im Wesentlichen vom Winkel β bestimmt.

Der Abbildungsmassstab und die Grösse der Aufnahmeoberfläche 10 des Detektors 11 normal zur Schnittlinie 9 hängen mit dem gewünschten Distanzbereich zusammen, so dass bei vorgegebenem Distanzbereich und bei einer vorgegebenen Grösse der Aufnahmeoberfläche 10 des Detektors 11 normal zur Schnittlinie 9 der Abbildungsmassstab und damit der Winkel β so gewählt werden muss, dass der gewünschten Distanzbereich auf die Aufnahmeoberfläche 10 abgebildet wird.

Nach der Wahl eines Objektivabstands kann entsprechend dem gewünschten Distanzbereich auch der für die richtige Abbildung benötigte Detektorabstand festgelegt werden.

Nach dem Festlegen der Winkel α und β, des Objektivabstand, des Detektorabstands und der Ausdehnung der Aufnahmeoberfläche des Detektors normal zur Schnittlinie kann die für eine scharfe Abbildung benötigte Brennweite des Abbildungsobjektivs festgelegt werden. Damit ein Punkt der Objektebene 6 von einer Linse scharf auf einen Punkt der Aufnahmeoberfläche 10 abgebildet wird, muss bei dieser Abbildung die Gegenstandsweite g, die Bildweite b und die Brennweite f des Abbildungsobjektivs 7 bzw. der Linse die Linsengleichung 1/f=1/g+1/b erfüllen. Entsprechend ist f=b*g/ (b+g).

In der dargestellten Ausführungsform umfasst der Detektor 11 einen zweidimensionalen Sensorarray, der direkt bei der Aufnahmeoberfläche 10 angeordnet ist. Für ein scharf abgebildetes Objekt wird in einer ersten Richtung normal zur Schnittlinie 9 die Position auf der Ausrichtungsachse 2 und vorzugsweise quer dazu in einer zweiten Richtung eine Höheninformation des Objektes erfasst. Die Positionsbestimmung auf der Ausrichtungsachse 2 entspricht somit einer Triangulations-Distanzmessung. Die Bestimmung der Höheninformation kann gemäss einer beliebigen aus dem Stande der Technik bekannten Codeauswertung durchgeführt werden.

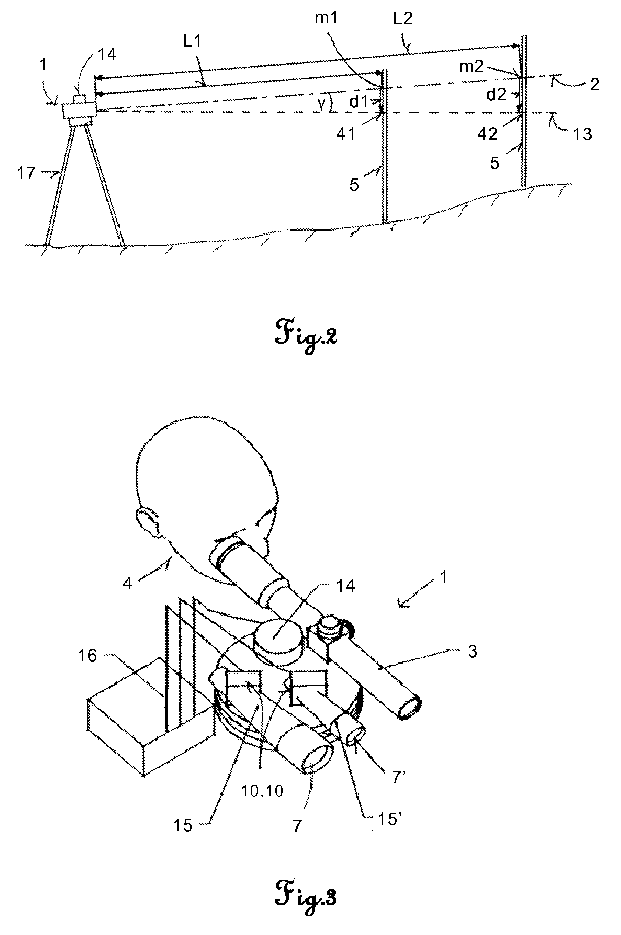

Fig. 2 zeigt eine Anordnung mit einem erfindungsgemässen Nivelliergerät 1, einem Dreibein 17 und einer Messlatte 5, bei der die Ausrichtungsachse 2 etwas von der exakten horizontalen Richtung 13 abweicht. Das Nivelliergerät 1 umfasst einen Neigungssensor 14, der mit der Auswertungsvorrichtung verbunden ist. Der Neigungssensor 14 bestimmt einen Abweichungswinkel γ zwischen der Ausrichtungsachse 2 und der horizontalen Ausrichtungslinie 13. Die bei der Ausrichtungsachse stehende Höheninformation m1 bzw. m2 stimmt nicht mit der effektiven Höhe überein. Die Auswertungsvorrichtung ermittelt aus dem Abweichungswinkel γ und Abständen L1 bzw. L2 Höhenkorrekturen d1 bzw. d2, wobei d1=L1*tan (γ) bzw. d2=L2*tan(γ). Die Abstände L1 bzw. L2 gehen aus der Triangulations-Distanzmessung mit kleinem Aufwand relativ genau hervor. Unter Berücksichtigung der Höhenkorrektur d1 bzw. d2 können sehr genaue Höhenwerte h1 bzw. h2 bestimmt werden.

Fig. 3 zeigt eine Ausführungsform des Nivelliergerätes 1 mit einer ersten und einer zweiten Abbildungsoptik 15,15', die je ein Abbildungsobjektiv 7,7' und einen eine Aufnahmeoberfläche aufweisenden Detektor 11,11' umfassen. Wenn der Bereich entlang der Ausrichtungsachse 2, welcher in der ersten Abbildungsoptik 15 auf die zugeordnete Aufnahmeoberfläche abgebildet wird, nicht genügt, so kann beispielsweise für einen Nahbereich die zweite Abbildungsoptik 15' eine Abbildung auf die zugeordnete Aufnahmeoberfläche des weiteren Detektors 11' gewährleisten. Dabei kann das zweite Abbildungssystem ebenso derart ausgebildet sein, dass gleichzeitig sämtliche innerhalb eines Erfassungsbereichs liegende Punkte der Objektebene scharf auf der Aufnahmeoberfläche des weiteren Detektors 11' abgebildet werden. Beispielsweise können Abbildungsobjektiv 7' und Detektor 11' - entsprechend Figur 1 - derart die Scheimpflug-Bedingung erfüllend angeordnet sein, dass sich auch die Objektivhauptebene des Abbildungsobjektivs 7', die Bildebene des Detektors 11' und die Objektebene in einer gemeinsamen Geraden schneiden.

Insbesondere können dabei die Abbildungsobjektive 7,7' der beiden für verschiedene Entfernungsbereiche ausgelegten Abbildungssysteme mit unterschiedlichen Brennweiten gewählt werden.

Gemäss einer alternativen Ausführungsform können die beiden Abbildungsoptiken 15,15' jedoch auch einem gemeinsamen Abbildungsobjektiv 7 nachgeordnet sein, wobei die Abbildungsoptiken 1515' auf zwei getrennte Detektoren 11,11' abbilden, insbesondere wobei unterschiedliche Winkel β und/oder unterschiedliche Detektorabstände gewählt sind.

Gemäss einer weiteren alternativen Ausführungsform werden von zwei unterschiedlichen Abbildungsobjektiven 7,7' Abbildungen nebeneinander auf die gleiche Aufnahmeoberfläche eines Detektors durchgeführt. Insbesondere kann dabei für die Ausrichtung der Objektivhauptebene des auf den näheren Distanzbereich gerichteten Abbildungsobjektivs ein Winkel α gewählt werden, der etwas kleiner als 90° ist.

Die Abbildungsparameter der zweiten Abbildungsoptik 15' werden so gewählt, dass Objekte eines anschliessenden Positionsbereichs auf die Aufnahmeoberfläche des zweiten Detektors 11' abgebildet werden. Eine Auswertungsvorrichtung 16 kann jeweils die Höheninformation des Detektors wählen, auf dessen Aufnahmeoberfläche ein Objekt mit einer Höheninformation abgebildet ist.

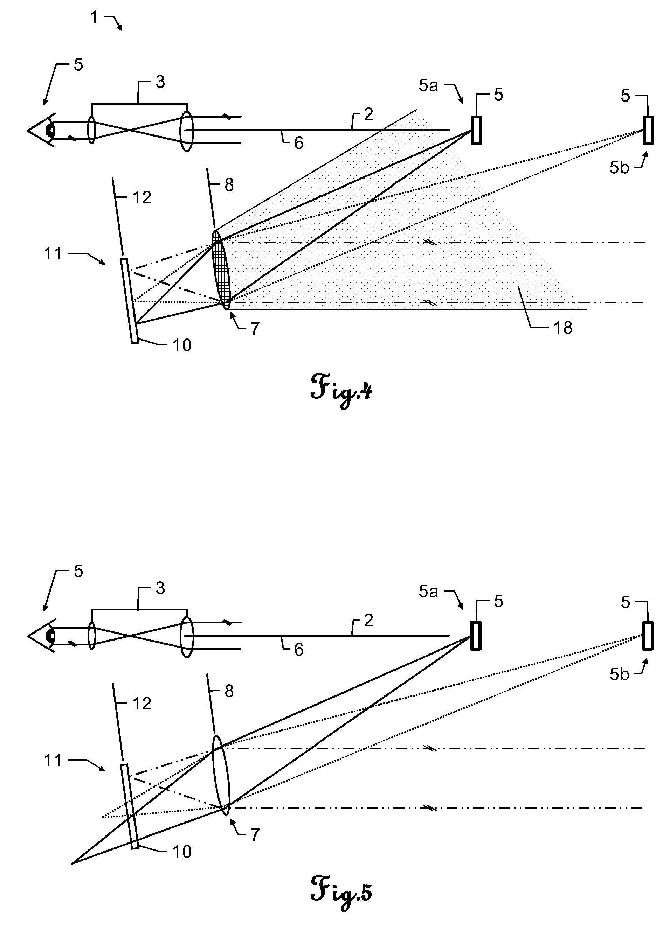

Figuren 4 und 5 zeigen jeweils ein Nivelliergerät, das dem in Figur 1 dargestellten Nivelliergerät ähnlich ist, jedoch nicht der beanspruchten Erfindung entspricht.

Das digitale Nivelliergerät 1 aus Figur 4 weist wiederum ein von dem Abbildungsobjektiv 7 mit nachgeordnetem Detektor 11 räumlich getrenntes Zielfernrohr 3 auf. Die optische Achse des Zielfernrohrs 3 definiert die Ausrichtungsachse 2, die ihrerseits eine insbesondere vertikale Objektebene 6 aufspannt, wobei die Ausrichtungsachse 2 zur Höhenbestimmung eines Messpunktes auf eine dort aufgestellte Messlatte 5 ausrichtet ist. Die Messlatte 5 ist dabei in zwei möglichen, zu vermessenden Positionen 5a,5b dargestellt.

Durch die jeweilige Ausbildung und Anordnung des Abbildungsobjektivs 7 und des nachgeordneten Detektors 11 wird ein Erfassungsbereich als Winkelbereich, innerhalb wessen sich im Sichtfeld des Nivelliergeräts befindende Punkte auf der Aufnahmeoberfläche 10 des Detektors 11 abgebildet werden können, definiert.

Das Abbildungsobjektiv 7 und der Detektor 11 genau derart ausgebildet sowie genau derart relativ zueinander und zum die Objektebene 6 definierenden Zielfernrohr 3 angeordnet, dass gleichzeitig sämtliche innerhalb des Erfassungsbereichs 18 liegende Punkte der Objektebene 6 scharf auf der Aufnahmeoberfläche 10 des Detektors 11 abgebildet werden.

Dafür weist das in Figur 4 gezeigte Abbildungsobjektiv 7 eine winkelabhängig, insbesondere azimutwinkelabhängig, über den Erfassungsbereich 18 variierende Brennweite auf.

Beispielsweise ist das Abbildungsobjektiv 7 dafür mit einer Bildfeldwölbung in einer, insbesondere horizontalen, Achse ausgebildet. Alternativ oder zusätzlich kann des Abbildungsobjektiv 7 jedoch auch eine diffraktive Struktur, die eine einfallswinkelabhängige Variation der Brennweite des Abbildungsobjektiv 7 erzeugt, aufweisen. Geeignete Bildfeldwölbungen und diffraktive Strukturen wie etwa eine Gitterstruktur, sodass das Abbildungsobjektiv 7 eine entsprechende einfallswinkelabhängige Variation der Brennweite aufweist, sind dem Fachmann bekannt und können je nach Anforderung an das Nivelliergerät entsprechend gewählt werden.

Rein beispielhaft kann das Abbildungsobjektiv 7 derart relativ zum Zielfernrohr 3 und zum Detektor angeordnet sein, dass die Objektebene 6 und die Objektivhauptebene 8 einen Winkel α, der ungefähr im Bereich zwischen 80° und knapp unter 90° liegt, einschliessen sowie dass die Objektivhauptebene 8 in etwa parallel zur Bildebene 12 ausgerichtet ist.

Die von der in der ersten Position 5a befindlichen Messlatte 5 ausgehenden Abbildungslinien, die durchgezogen dargestellt sind, treffen dabei in einem ersten Einfallswinkel auf dem Abbildungsobjektiv 7 auf. Die von der in der zweiten Position 5b befindlichen Messlatte 5 ausgehenden Abbildungslinien, die gepunktet dargestellt sind, treffen hingegen in einem sich vom ersten unterscheidenden, zweiten Einfallswinkel auf dem Abbildungsobjektiv 7 auf. Die beispielhaft aus dem Unendlichen kommenden Abbildungslinien, die anhand der Strich-Punkt-Punkt-Linie dargestellt sind, treffen unter einem dritten Einfallswinkel auf dem Abbildungsobjektiv 7 auf.

Wie nun in Figur 4 ersichtlich ist, weist das Abbildungsobjektiv 7 für den ersten Einfallswinkel eine geringere Brennweite als für den zweiten Einfallswinkel auf, und für den dritten Einfallswinkel eine nochmals geringere Brennweite als für den zweiten Einfallswinkel. Insbesondere nimmt also die Brennweite dabei kontinuierlich über den Winkelverlauf des Erfassungsbereichs - von der zur Ausrichtungsachse zugewendeten Erfassungsbereichsgrenze hin zu der gegenüber der Ausrichtungsachse abgewandten Erfassungsbereichsgrenze - ab.

Figur 5 zeigt - rein zum besseren Verständnis der in Figur 4 dargestellten Ausführungsform-die gleiche Anordnungsweise der Abbildungssystem-Komponenten wie in Figur 4, jedoch mit einem gewöhnlich ausgebildeten Abbildungsobjektiv 7 ohne winkelabhängig variierender Brennweite.

Wie aus Figur 5 nun ersichtlich ist, erlaubt ein gewöhnliches Abbildungsobjektiv 7 ohne winkelabhängig variierender Brennweite bei der dort dargestellten Anordnungsweise von Detektor 11 und Abbildungsobjektiv 7 hingegen keine gleichzeitige scharfe Abbildung sämtlicher innerhalb des Erfassungsbereichs liegenden Punkte der Objektebene 6 auf der Aufnahmeoberfläche 10 des Detektors 11.

Zur scharfen Abbildung der in der ersten Position 5a bzw. in der zweiten Position 5b dargestellten Messlatte wäre nun eine jeweils unterschiedlich weite Verschiebung entweder der Fokusposition des Abbildungsobjektivs 7 oder des Detektors 11 erforderlich. Dies birgt allerdings die Gefahr von Abweichungen in der Fokussierlinie, die auch Ablauffehler genannt werden. Gemäss Figur 4 ist hingegen - unabhängig von der Entfernung der anvisierten Messlatte - nur eine feste Fokusposition des Abbildungsobjektivs 7 bzw. des Detektors 11 vorgesehen, sodass keine fehleranfällige Verschiebungen von optischen Komponenten des Abbildungssystems erforderlich sind.

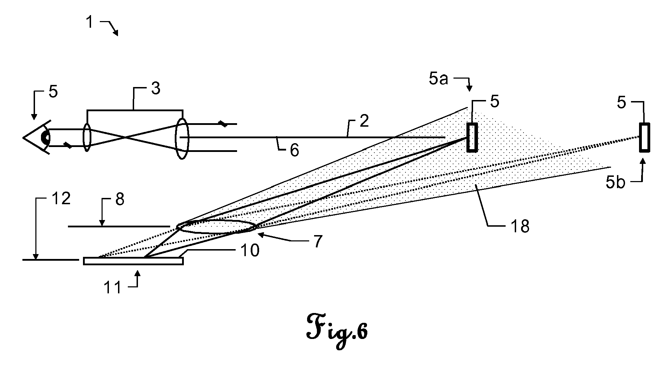

Figur 6 zeigt eine alternative Ausführungsform eines digitalen Nivelliergeräts 1 gemäss der Erfindung, wobei die Ausbildungs- und Anordnungsweise des Abbildungsobjektivs 7 und des Detektors 11 insbesondere für einen begrenzten Nahbereich ausgelegt sind, da der Erfassungsbereich 18 in diesem Fall stark eingeschränkt ist.

Wie in Figur 6 ersichtlich, sind Abbildungsobjektiv 7, Detektor 11 und Fernrohr 3 derart relativ zueinander angeordnet, dass die Objektivhauptebene 8 und die Bildebene 12 parallel zueinander sowie jeweils parallel zur Objektebene 6 ausgerichtet sind. Darüber hinaus ist die Anordnungsweise von Abbildungsobjektiv 7 und Detektor 11 derart gewählt, dass die - zur Objektivhauptebene 8 bzw. Bildebene 12 - lotrechten optischen Achsen des Abbildungsobjektivs 7 und des Detektors 11 dabei verhältnismässig weit voneinander parallel versetzt angeordnet sind.

Das Abbildungsobjektiv 7 aus Figur 6 kann - wie gemäss Figur 1 - als Standard-Linse oder Standard-Linsengruppe ausgebildet sind. D.h., dass das Abbildungsobjektiv 7 bei dieser Anordnungsweise insbesondere keine einfallswinkelabhängig variierende Brennweite aufweist.

Auch diese spezielle Anordnungsweise gemäss der Erfindung gewährleistet nun, dass gleichzeitig sämtliche innerhalb des Erfassungsbereichs 18 liegende Punkte der Objektebene 6 scharf auf der Aufnahmeoberfläche 10 des Detektors 11 abgebildet werden. Insbesondere ist auch bei dieser Anordnungsweise die Scheimpflug-Bedingung erfüllt, da Bildebene 12, Hauptobjektivebene 8 und Objektebene 6 parallel zueinander liegen.

Die in Figur 6 gezeigte Anordnungsweise kann dabei insbesondere auch in einem erfindungsgemässen Nivelliergerät mit zwei oder mehreren getrennten Abbildungssystemen für jeweils unterschiedliche Entfernungsbereiche Anwendung finden. Beispielsweise kann erfindungsgemäss auch ein Nivelliergerät entsprechend jenem in Figur 3 bereitgestellt werden, wobei jedoch das für den Nahbereich ausgelegte Abbildungssystem der in Figur 6 gezeigten Ausbildungs- und Anordnungsweise von Abbildungsobjektiv 7 und Detektor 11 entspricht. Das für den Fernbereich ausgelegte Abbildungssystem kann hingegen entweder - wie etwa in Figur 1 gezeigt - eine Anordnungsweise aufweisen, wobei sich Bildebene 12, Hauptobjektivebene 8 und Objektebene 6 in einer Geraden schneiden, oder alternativ - entsprechend Figur 4 - mit einem Abbildungsobjektiv 7 mit einfallswinkelabhängig variierender Brennweite ausgeführt sein.

Es versteht sich, dass diese dargestellten Figuren nur mögliche Ausführungsbeispiele schematisch darstellen. Die verschiedenen Ansätze können im Rahmen der nachfolgenden Ansprüche ebenso miteinander sowie mit Verfahren des Stands der Technik kombiniert werden.

## Patentansprüche

1. Nivelliergerät (1) mit
- einer eine Ausrichtungsachse (2) definierenden Anzieleinrichtung die zur Höhenbestimmung auf eine Messlatte (5) ausrichtbar ist,
- einem räumlich von der Anzieleinrichtung getrennten Abbildungssystem mit
- einem Abbildungsobjektiv (7), dem eine Objektivhauptebene (8) zugeordnet ist, und
- einem Detektor (11), mit einer in einer Bildebene (12) liegenden Aufnahmeoberfläche (10),
wobei durch das Abbildungsobjektiv (7) und den Detektor (11) ein Sichtfeld (18) des Abbildungssystems definiert ist als jener maximale Winkelbereich, innerhalb welchem Punkte durch das Abbildungsobjektiv (7) mit der Aufnahmeoberfläche (10) des Detektors (11) erfassbar sind, und
- einer Auswertungsvorrichtung (16), die mit dem Detektor (11) verbunden ist,
wobei durch die Auswertungsvorrichtung (16) unter Verwendung der Detektorinformation eine Höheninformation der Messlatte (5) auf Höhe der Ausrichtungsachse (2) als Messhöhe bereitstellbar ist,
**dadurch gekennzeichnet, dass**
das Abbildungsobjektiv (7) und der Detektor (11) derart ausgebildet sowie derart relativ zueinander und zu einer die Ausrichtungsachse (2) enthaltenden Objektebene (6) angeordnet sind, dass gleichzeitig sämtliche innerhalb des Sichtfelds (18) liegende Punkte der Objektebene (6) scharf auf der Aufnahmeoberfläche (10) des Detektors (11) abgebildet werden, wobei
- die Objektivhauptebene (8),
- die Bildebene (12) und
- die Objektebene (6),
die Scheimpflug-Bedingung erfüllend relativ zueinander ausgerichtet sind.

2. Nivelliergerät (1) nach Anspruch 1,
**dadurch gekennzeichnet, dass**
- die Objektivhauptebene (8),
- die Bildebene (12) und
- die Objektebene (6),
die Scheimpflug-Bedingung erfüllend, parallel zueinander ausgerichtet sowie dass die - zur Objektivhauptebene (8) bzw. Bildebene (12) - lotrechten optischen Achsen des Abbildungsobjektivs (7) und des Detektors (11) mit einem Versatz voneinander beabstandet angeordnet sind.

3. Nivelliergerät (1) nach Anspruch 1,
**dadurch gekennzeichnet, dass**
sich, die Scheimpflug-Bedingung erfüllend,
- die Objektivhauptebene (8),
- die Bildebene (12) und
- die Objektebene (6)
in einer gemeinsamen Schnittlinie (9) schneiden, wobei zwischen der Objektebene (6) und der Objektivhauptebene (8) ein Winkel α sowie zwischen der Objektivhauptebene (8) und der Bildebene (12) ein Winkel β ausgebildet ist.

4. Nivelliergerät (1) nach Anspruch 3,
**dadurch gekennzeichnet, dass**
das Zentrum des Abbildungsobjektivs (7) in einem Objektivabstand und das Zentrum der Aufnahmeoberfläche (10) des Detektors (11) in einem Detektorabstand von der Schnittlinie (9) beabstandet sind und beide Zentren im Wesentlichen in einer gemeinsamen Normalebene zur Schnittlinie (9) liegen, welche Normalebene auch die Ausrichtungsachse (2) umfasst.

5. Nivelliergerät (1) nach Anspruch 3 oder 4,
**dadurch gekennzeichnet, dass**
die Winkel α und β, der Objektivabstand, der Detektorabstand und die Ausdehnung der Aufnahmeoberfläche (10) des Detektors (11) normal zur Schnittlinie (9) entsprechend einem abzubildenden Distanzbereich auf der Ausrichtungsachse (2) gewählt sind, wobei der Abbildungsmassstab durch die Wahl der Winkel α und β bestimmt ist und der Winkel α vorzugsweise im Bereich von 80° bis 90°, insbesondere im Wesentlichen bei 90°, liegt und insbesondere wobei g die Gegenstandsweite und b die Bildweite ist, welche der Abbildung eines Punktes der Objektebene (6) auf einen Punkt der Aufnahmeoberfläche (10) des Detektors (11) entsprechen und dass das Abbildungsobjektiv (7) eine Brennweite f hat, welche durch die Gleichung 1/f=1/g+1/b bestimmt ist.

6. Nivelliergerät (1) nach einem der Ansprüche 1 bis 5,
**dadurch gekennzeichnet, dass**
der Detektor (11) einen zweidimensionalen Sensorarray umfasst, wobei in einer ersten Richtung des Sensorarrays für einen scharf abgebildeten Messlattenabschnitt die Position auf der Ausrichtungsachse (2) und quer dazu in einer zweiten Richtung eine Höheninformation des Messlattenabschnitts erfassbar ist.

7. Nivelliergerät (1) nach Anspruch 6,
**dadurch gekennzeichnet, dass**
ein Neigungssensor (14) mit der Auswertungsvorrichtung (16) verbunden ist, wobei der Neigungssensor (14) einen Abweichungswinkel γ zwischen der Ausrichtungsachse (2) und einer horizontalen Ausrichtungslinie (13) bereitstellt und die Auswertungsvorrichtung (16) die Höheninformation unter Verwendung des Abweichungswinkels γ und der Position des abgebildeten Messlattenabschnitts auf der Ausrichtungsachse (2) bereitstellt.

8. Nivelliergerät (1) nach einem der Ansprüche 1 bis 7,
**dadurch gekennzeichnet, dass**
mindestens ein weiteres Abbildungssystem vorgesehen ist mit
- mindestens einem weiteren Detektor (11'), dessen weitere Aufnahmeoberfläche in einer weiteren Bildebene liegt, und
- einem dem weiteren Detektor (11') vorgeordneten weiteren Abbildungsobjektiv (7'), dem eine weitere Objektivhauptebene zugeordnet ist,
wobei das weitere Abbildungsobjektiv (7') und der weitere Detektor (11') derart ausgebildet sowie derart relativ zueinander und zur Objektebene (6) angeordnet sind, dass gleichzeitig sämtliche innerhalb eines Sichtfelds des weiteren Abbildungssystems liegende Punkte der Objektebene (6) scharf auf der weiteren Aufnahmeoberfläche des weiteren Detektors (11') abgebildet werden,
und wobei die Auswertungsvorrichtung (16) unter Verwendung der Information des weiteren Detektors (11') eine Höheninformation zu dem abgebildeten Messlattenabschnitt bereitstellt.

9. Nivelliergerät (1) nach einem der Ansprüche 1 bis 8,
**dadurch gekennzeichnet, dass**
die Anzieleinrichtung als Fernrohr (3) ausgebildet ist und die Ausrichtungsachse (2) durch die optische Achse des Fernrohrs (3) gebildet wird.

10. Verfahren zum Nivellieren mit einer Messlatte (5), die Höheninformationen umfasst, und einem Nivelliergerät (1) nach einem der Ansprüche 1 bis 9, wobei die Ausrichtungsachse (2) des Nivelliergerätes (1) mithilfe der Anzieleinrichtung auf die Messlatte (5) gerichtet und die vom Detektor (11) und der Auswertungsvorrichtung (16) ermittelte Höheninformation der Messlatte (5) auf der Höhe der Ausrichtungsachse (2) als Messhöhe bereitgestellt wird,
**dadurch gekennzeichnet, dass**
bei der Bestimmung der Messhöhe die abgebildete Höheninformation zumindest teilweise in der Objektebene (6) des Nivelliergerätes (1) liegt und dass das Abbildungsobjektiv (7) und der Detektor (11) derart ausgebildet sowie derart relativ zueinander und zur Objektebene (6) angeordnet sind, dass gleichzeitig sämtliche innerhalb des Sichtfelds (18) liegende Punkte der Objektebene (6) scharf auf der Aufnahmeoberfläche (10) des Detektors (11) abgebildet werden, wobei
- die Objektivhauptebene (8),
- die Bildebene (12) und
- die Objektebene (6),
die Scheimpflug-Bedingung erfüllend relativ zueinander ausgerichtet sind.

11. Verfahren nach Anspruch 10,
**dadurch gekennzeichnet, dass**
- sich die Objektebene (6), die Objektivhauptebene (8) sowie die Bildebene (12) in einer gemeinsamen Schnittlinie (9) schneiden oder
- die die Objektebene (6), Objektivhauptebene (8) sowie die Bildebene (12) parallel zueinander ausgerichtet und die - zur Objektivhauptebene (8) bzw. Bildebene (12) - lotrechten optischen Achsen des Abbildungsobjektivs (7) und des Detektors (11) mit einem Versatz voneinander beabstandet angeordnet sind.

12. Verfahren nach Anspruch 10 oder 11,
**dadurch gekennzeichnet, dass**
der Detektor (11) einen zweidimensionalen Sensorarray umfasst und in einer ersten Richtung des Sensorarrays für einen scharf abgebildeten Messlattenabschnitt die Position auf der Ausrichtungsachse (2) und quer dazu in einer zweiten Richtung eine Höheninformation des Messlattenabschnitts erfasst wird.

13. Verfahren nach Anspruch 12,
**dadurch gekennzeichnet, dass**
ein Neigungssensor (14) einen Abweichungswinkel γ zwischen der Ausrichtungsachse (2) und einer horizontalen Ausrichtungslinie (13) erfasst und die Höheninformation unter Verwendung des Abweichungswinkels γ und der Position des abgebildeten Messlattenabschnitts auf der Ausrichtungsachse (2) bestimmt wird.

14. Verfahren nach einem der Ansprüche 10 bis 13,
**dadurch gekennzeichnet, dass**
die gleiche Höhenmessung mit mindestens zwei Wellenlängen durchgeführt und aus den gefundenen Messdifferenzen ein theoretischer Höhenwert im Vakuum extrapoliert wird, sodass der Effekt von Brechungsindexschwankungen in der Luft kompensiert wird.

## Claims

1. A leveling device (1) comprising
- a targeting device, which defines an alignment axis (2) and which can be aligned with a measuring rod (5) for the purpose of determining height,
- an imaging system, which is spatially separated from the targeting device and comprises
- an imaging objective (7), to which an objective principal plane (8) is assigned, and
- a detector (11), comprising a recording surface (10) lying in an image plane (12),
wherein a field of view (18) of the imaging system is defined by the imaging objective (7) and the detector (11) as that maximum angle range within which points can be detected by the imaging objective (7) by means of the recording surface (10) of the detector (11), and
- an evaluation device (16), which is connected to the detector (11),
wherein height information of the measuring rod (5) at the height of the alignment axis (2) can be provided as a measurement height by the evaluation device (16) using the detector information,
**characterized in that**
the imaging objective (7) and the detector (11) are embodied and arranged relative to one another and to an object plane (6) containing the alignment axis (2) in such a way that all points of the object plane (6) which lie within the field of view (18) are simultaneously imaged sharply on the recording surface (10) of the detector (11),
wherein
- the objective principal plane (8),
- the image plane (12) and
- the object plane (6),
are aligned relative to one another in a manner meeting the Scheimpflug condition.

2. The leveling device (1) as claimed in claim 1, **characterized in that**
- the objective principal plane (8),
- the image plane (12) and
- the object plane (6),
in a manner meeting the Scheimpflug condition, are aligned parallel to one another and that the optical axes of the imaging objective (7) and of the detector (11), said optical axes being perpendicular to the objective principal plane (8) and image plane (12), respectively, are arranged in a manner spaced apart from one another with an offset.

3. The leveling device (1) as claimed in claim 1, **characterized in that**
in a manner meeting the Scheimpflug condition,
- the objective principal plane (8),
- the image plane (12) and
- the object plane (6)
intersect in a common intersection line (9), wherein an angle α is formed between the object plane (6) and the objective principal plane (8) and an angle β is formed between the objective principal plane (8) and the image plane (12).

4. The leveling device (1) as claimed in claim 3,
**characterized in that**
the center of the imaging objective (7) is spaced apart at an objective distance and the center of the recording surface (10) of the detector (11) is spaced apart at a detector distance from the intersection line (9) and both centers substantially lie in a common normal plane with respect to the intersection line (9), which normal plane also comprises the alignment axis (2).

5. The leveling device (1) as claimed in claim 3 or 4,
**characterized in that**
the angles α and β, the objective distance, the detector distance and the extent of the recording surface (10) of the detector (11) perpendicular to the intersection line (9) are chosen in accordance with a distance range to be imaged on the alignment axis (2) wherein the imaging scale is determined by the choice of the angles α and β and the angle α preferably lies in the range of 80° to 90°, and more particularly is substantially 90°, and more particularly wherein g is the object distance and b the image distance which correspond to the imaging of a point of the object plane (6) onto a point of the recording surface (10) of the detector (11), and **in that** the imaging objective (7) has a focal length f determined by the equation 1/f = 1/g + 1/b.

6. The leveling device (1) as claimed in any one of claims 1 to 5,
**characterized in that**
the detector (11) comprises a two-dimensional sensor array, wherein it is possible to detect the position on the alignment axis (2) in a first direction of the sensor array for a sharply imaged measuring rod section and height information of the measuring rod section in a second direction transversely with respect thereto.

7. The leveling device (1) as claimed in claim 6,
**characterized in that**
an inclination sensor (14) is connected to the evaluation device (16), wherein the inclination sensor (14) provides a deviation angle γ between the alignment axis (2) and a horizontal alignment line (13) and the evaluation device (16) provides the height information using the deviation angle γ and the position of the imaged measuring rod section on the alignment axis (2).

8. The leveling device (1) as claimed in any one of claims 1 to 7,
**characterized in that**
at least one further imaging system is provided, comprising
- at least one further detector (11'), the further recording surface of which lies in a further image plane, and
- a further imaging objective (7'), which is disposed upstream of the further detector (11') and to which a further objective principal plane is assigned,
wherein the further imaging objective (7') and the further detector (11') are embodied and arranged relative to one another and to the object plane (6) in such a way that all points of the object plane (6) which lie within a field of view of the further imaging system are simultaneously imaged sharply on the further recording surface of the further detector (11'),
and wherein the evaluation device (16) provides height information with respect to the imaged measuring rod section using the information of the further detector (11').

9. The leveling device (1) as claimed in any one of claims 1 to 8,
**characterized in that**
the targeting device is embodied as a telescope (3) and the alignment axis (2) is formed by the optical axis of the telescope (3).

10. A method for leveling using a measuring rod (5), which comprises height information, and a leveling device (1) as claimed in any one of claims 1 to 9, wherein the alignment axis (2) of the leveling device (1) is directed with the aid of the targeting device onto the measuring rod (5) and the height information - determined by the detector (11) and the evaluation device (16) - of the measuring rod (5) at the height of the alignment axis (2) is provided as a measurement height,
**characterized in that**
when the measurement height is determined, the imaged height information at least partly lies in the object plane (6) of the leveling device (1), and **in that**
the imaging objective (7) and the detector (11) are embodied and arranged relative to one another and to the object plane (6) in such a way that all points of the object plane (6) which lie within the field of view (18) are simultaneously imaged sharply on the recording surface (10) of the detector (11), wherein
- the objective principal plane (8),
- the image plane (12) and
- the object plane (6),
are aligned relative to one another in a manner meeting the Scheimpflug condition.

11. The method as claimed in claim 10,
**characterized in that**
- the object plane (6), the objective principal plane (8) and the image plane (12) intersect in a common intersection line (9) or
- the the object plane (6), objective principal plane (8) and the image plane (12) are aligned parallel to one another and the optical axes of the imaging objective (7) and of the detector (11), said optical axes being perpendicular to the objective principal plane (8) and image plane (12), respectively, are arranged in a manner spaced apart from one another with an offset.

12. The method as claimed in claim 10 or 11,
**characterized in that**
the detector (11) comprises a two-dimensional sensor array and the position on the alignment axis (2) is detected in a first direction of the sensor array for a sharply imaged measuring rod section and height information of the measuring rod section is detected in a second direction transversely with respect thereto.

13. The method as claimed in claim 12,
**characterized in that**
an inclination sensor (14) detects a deviation angle γ between the alignment axis (2) and a horizontal alignment line (13) and the height information is determined using the deviation angle γ and the position of the imaged measuring rod section on the alignment axis (2).

14. The method as claimed in any one of claims 10 to 13,
**characterized in that**
the same height measurement is carried out with at least two wavelengths and a theoretical height value in a vacuum is extrapolated from the measurement differences found, such that the effect of refractive index fluctuations in the air is compensated for.

## Revendications

1. Appareil de nivellement (1) avec
- un dispositif de visée qui définit un axe d'orientation (2) qui peut être orienté pour la détermination de la hauteur sur une latte de mesure (5),
- un système d'imagerie séparé spatialement du dispositif de visée avec
- un objectif de représentation (7) auquel un plan principal d'objectif (8) est associé et
- un détecteur (11) avec une surface de prise de vues (10) située dans un plan d'image (12),
cependant qu'un champ de vision (18) du système d'imagerie est défini par l'objectif de représentation (7) et le détecteur (11) comme la plage angulaire maximale à l'intérieur de laquelle des points peuvent être détectés par l'objectif de représentation (7) avec la surface de prise de vues (10) du détecteur (11) et
- un dispositif d'analyse (16) qui est relié au détecteur (11),
cependant qu'une information de hauteur de la latte de mesure (5) à hauteur de l'axe d'orientation (2) peut être mise à disposition comme hauteur de mesure par le dispositif d'analyse (16) en utilisant l'information du détecteur,
**caractérisé en ce que** l'objectif de représentation (7) et le détecteur (11) sont configurés de telle manière et sont placés l'un par rapport à l'autre et par rapport à un plan d'objet (6) qui contient l'axe d'orientation (2) de telle manière que tous les points du plan d'objet (6) qui se situent à l'intérieur du champ de vision (18) sont reproduits simultanément de manière précise sur la surface de prise de vues (10) du détecteur (11), cependant que
- le plan principal d'objectif (8),
- le plan d'image (12) et
- le plan d'objet (6)
sont orientés l'un par rapport à l'autre en remplissant la condition Scheimpflug.

2. Appareil de nivellement (1) selon la revendication 1, **caractérisé en ce que**
- le plan principal d'objectif (8),
- le plan d'image (12) et
- le plan d'objet (6)
sont orientés parallèlement l'un par rapport à l'autre en remplissant la condition Scheimpflug ainsi que les axes optiques de l'objectif de représentation (7) et du détecteur (11) verticaux - par rapport au plan principal d'objectif (8) ou au plan d'image (12) - sont placés espacés l'un de l'autre avec un décalage.

3. Appareil de nivellement (1) selon la revendication 1, **caractérisé en ce que**
- le plan principal d'objectif (8),
- le plan d'image (12) et
- le plan d'objet (6)
se coupent, en remplissant la condition Scheimpflug, dans une ligne d'intersection commune (9), cependant qu'un angle a est formé entre le plan d'objet (6) et le plan principal d'objectif (8) ainsi qu'un angle β est formé entre le plan principal d'objectif (8) et le plan d'image (12).

4. Appareil de nivellement (1) selon la revendication 3, **caractérisé en ce que** le centre de l'objectif de représentation (7) est espacé dans une distance de l'objectif et le centre de la surface de prise de vues (10) du détecteur (11) est espacé dans une distance de détecteur par rapport à la ligne d'intersection (9) et que les deux centres se situent substantiellement dans un plan normal commun par rapport à la ligne d'intersection (9), lequel plan normal comprend aussi l'axe d'orientation (2).

5. Appareil de nivellement (1) selon la revendication 3 ou 4, **caractérisé en ce que** les angles α et β, la distance de l'objectif, la distance de détecteur et l'extension de la surface de prise de vues (10) du détecteur (11) sont sélectionnés sur l'axe d'orientation (2) verticalement par rapport à la ligne d'intersection (9) selon une plage de distance à représenter, cependant que l'échelle de représentation est déterminée par le choix des angles α et β et l'angle α se situe de préférence dans une plage de 80° à 90°, en particulier sensiblement autour de 90° et en particulier cependant que g est la largeur d'objet et b la largeur d'image qui correspondent à la représentation d'un point du plan d'objet (6) sur un point de la surface de prise de vues (10) du détecteur (11) et que l'objectif de représentation (7) a une distance focale f qui est déterminée par l'équation 1/f=1/g+1/b.

6. Appareil de nivellement (1) selon l'une des revendications 1 à 5, **caractérisé en ce que** le détecteur (11) comprend un ensemble bidimensionnel de détecteurs, cependant que la position sur l'axe d'orientation (2) peut être détectée dans une première direction de l'ensemble de détecteurs pour une section de la latte de mesure représentée de manière nette et une information de hauteur de la section de la latte de mesure peut être détectée dans une seconde direction transversalement par rapport à celle-ci.

7. Appareil de nivellement (1) selon la revendication 6, **caractérisé en ce qu'**un capteur d'inclinaison (14) est lié au dispositif d'analyse (16), cependant que le capteur d'inclinaison (14) met à disposition un angle de divergence γ entre l'axe d'orientation (2) et une ligne d'orientation horizontale (13) et le dispositif d'analyse (16) met à disposition l'information de hauteur en utilisant l'angle de divergence γ et la position de la section de la latte de mesure représentée sur l'axe d'orientation (2).

8. Appareil de nivellement (1) selon l'une des revendications 1 à 7, **caractérisé en ce qu'**au moins un autre système de représentation est prévu avec
- au moins un autre détecteur (11') dont l'autre surface de prise de vues se situe dans un autre plan d'image et
- un autre objectif de représentation (7'), placé en amont de l'autre détecteur (11'), auquel est associé un autre plan principal d'objectif,
cependant que l'autre objectif de représentation (7') et l'autre détecteur (11') sont configurés et placés l'un par rapport à l'autre et par rapport au plan d'objet (6) tels que tous les points du plan d'objet (6) situés à l'intérieur d'un champ de vision de l'autre système de représentation sont représentés simultanément de manière précise sur l'autre surface de prise de vues de l'autre détecteur (11') et cependant que le dispositif d'analyse (16) met à disposition une information de hauteur pour la section de latte de mesure représentée en utilisant l'information de l'autre détecteur (11').

9. Appareil de nivellement (1) selon l'une des revendications 1 à 8, **caractérisé en ce que** le dispositif de visée est configuré comme un télescope (3) et l'axe d'orientation (2) est formé par l'axe optique du télescope (3).

10. Procédé pour niveler avec une latte de mesure (5) qui comprend des informations de hauteur et avec un appareil de nivellement (1) selon l'une des revendications 1 à 9, cependant que l'axe d'orientation (2) de l'appareil de nivellement (1) est orienté sur la latte de mesure (5). à l'aide du dispositif de visée et que l'information de hauteur de la latte de mesure (5), déterminée par le détecteur (11) et le dispositif d'analyse (16), est mise à disposition à la hauteur de l'axe d'orientation (2) comme hauteur de mesure,
**caractérisé en ce que**, lors de la détermination de la hauteur de mesure, l'information de hauteur représentée se situe au moins partiellement dans le plan d'objet (6) de l'appareil de nivellement (1) et que l'objectif de représentation (7) et le détecteur (11) sont configurés et placés l'un par rapport à l'autre et par rapport au plan d'objet (6) de telle manière que tous les points du plan d'objet (6) situés à l'intérieur du champ de vision (18) sont représentés simultanément de manière précise sur la surface de prise de vues (10) du détecteur (11), cependant que
- le plan principal d'objectif (8),
- le plan d'image (12) et
- le plan d'objet (6)
sont orientés l'un par rapport à l'autre en remplissant la condition Scheimpflug.

11. Procédé selon la revendication 10, **caractérisé en ce que**
- le plan d'objet (6), le plan principal d'objectif (8) ainsi que le plan d'image (12) se coupent dans une ligne d'intersection commune (9) ou
- le plan d'objet (6), le plan principal d'objectif (8) ainsi que le plan d'image (12) sont orientés parallèlement l'un à l'autre et les axes optiques de l'objectif de représentation (7) verticaux - par rapport au plan principal d'objectif (8) ou au plan d'image (12) - et du détecteur (11) sont placés espacés l'un de l'autre avec un décalage.

12. Procédé selon la revendication 10 ou 11, **caractérisé en ce que** le détecteur (11) comprend un ensemble bidimensionnel de détecteurs et que la position sur l'axe d'orientation (2) est détectée dans une première direction de l'ensemble de détecteurs pour une section de la latte de mesure représentée de manière nette et une information de hauteur de la section de la latte de mesure dans une seconde direction transversalement par rapport à celle-ci.

13. Procédé selon la revendication 12, **caractérisé en ce qu'**un capteur d'inclinaison (14) met à disposition un angle de divergence γ entre l'axe d'orientation (2) et une ligne d'orientation horizontale (13) et l'information de hauteur est déterminée en utilisant l'angle de divergence γ et la position de la section de latte de mesure représentée sur l'axe d'orientation (2).

14. Procédé selon l'une des revendications 10 à 13, **caractérisé en ce que** la même mesure de hauteur est exécutée avec au moins deux longueurs d'onde et qu'une valeur de hauteur théorique est extrapolée dans le vide à partir des différences de mesure trouvées si bien que l'effet de fluctuations de l'indice de réfraction dans l'air est compensé.
